# EUROPÄISCHE PATENTSCHRIFT

(11) **EP 3 189 253 B1**
(45) Veröffentlichungstag und Bekanntmachung des Hinweises auf die Patenterteilung: **11.11.2020**
(21) Anmeldenummer: 15760091.7
(22) Anmeldetag: 01.09.2015
(51) Int. Cl.: F16H 61/04, F16H 61/21, F16H 63/42

(54) **VERFAHREN UND VORRICHTUNG ZUR SCHALTASSISTENZ**
METHOD AND DEVICE FOR GEAR SHIFT ASSISTANCE
PROCÉDÉ ET DISPOSITIF D'AIDE AU CHANGEMENT DE VITESSES

(30) Priorität: 05.09.2014 DE 102014013183
(43) Veröffentlichungstag der Anmeldung: 12.07.2017
(73) Patentinhaber: Audi AG, 85045 Ingolstadt (DE)
(72) Erfinder: RINGAL, Johann, 85051 Ingolstadt (DE)
(86) Internationale Anmeldenummer: PCT/EP2015/001763
(87) Internationale Veröffentlichungsnummer: WO 2016/034281

(56) Entgegenhaltungen:
- EP-A2- 1 790 946
- DE-A1-102005 045 049
- DE-A1-102010 003 673
- DE-A1-102011 103 722
- US-A1- 2009 233 762

## Beschreibung

Die vorliegende Erfindung betrifft ein Verfahren zum Darstellen und Berechnen einer Gangwahlempfehlung bei einem manuell zu schaltenden Getriebe in einem Fahrzeug sowie ein entsprechendes Fahrzeug.

Eine von einem Motor, wie bspw. einem Verbrennungsmotor erzeugte Kraft wird in der Regel über ein Getriebe übersetzt und an bspw. Räder eines Fahrzeugs weitergeleitet, um das Fahrzeug dadurch anzutreiben. Durch Auswahl eines geeigneten Übersetzungsverhältnisses durch einen geeigneten Gang in einem Getriebe kann auf eine Effizienz des Motors eingewirkt werden.

Da bei niedrigen Gängen gegenüber hohen Gängen erhöhte Motordrehzahlen auftreten, bedingen niedrige Gänge auch eine erhöhte Reibungskraft jeweiliger Komponenten, wie bspw. Kolben und/oder Wellen, die durch einen jeweiligen Motor für einen Schubbetrieb überwunden werden muss. Derartige Reibungskraft kann ferner zur Aufnahme bzw. zum Abbau von Bewegungsenergie eines jeweiligen Fahrzeugs genutzt werden. Die von einem jeweiligen Fahrzeug aufgebrachte Bewegungsenergie kann von den Rädern eines jeweiligen Fahrzeugs auf das Getriebe und, dadurch bedingt, auf den Motor des Fahrzeugs übergehen und dort eine Bewegung jeweiliger Komponenten, wie bspw. Zahnrädern, Wellen oder Kolben bewirken. Die jeweiligen Komponenten sind dabei teils erheblichen Reibungskräften ausgesetzt, die wiederum zum Abbau bzw. zur Konvertierung der auf die jeweiligen Komponenten einwirkenden Bewegungsenergie in bspw. Wärme führen.

Ein gezielter Abbau bzw. eine gezielte Umwandlung von Bewegungsenergie in Wärme ist unter dem Begriff "Motorbremse" bekannt. Bei einer Fahrt mit einer Motorbremse, kann bspw. eine Beschleunigungsenergie, die durch ein Gefälle auf ein Fahrzeug einwirkt, reduziert oder sogar kompensiert werden, so dass das Fahrzeug an der Steigung keine Beschleunigung erfährt oder sogar verzögert, ohne dass Bremssysteme, wie bspw. Reibbremsen, verwendet werden müssen.

Eine Auswahl eines optimalen Gangs hängt von verschiedenen Faktoren, wie bspw. Fahrzeuggewicht, aktueller Steigung oder Motorgröße ab. Um einen Fahrer eines Fahrzeugs bei einer Wahl eines optimalen Gangs zu unterstützen, sind im Stand der Technik Vorrichtungen und Verfahren beschrieben.

Die deutsche Offenlegungsschrift DE 10 2011 121 476 A1 offenbart ein Verfahren zum Betreiben eines Handschaltgetriebes in einem Fahrzeug, bei dem, falls in einem Getriebe kein Gang eingelegt ist, erkannt wird, dass ein Gang eingelegt werden soll.

Ein Verfahren zum Anzeigen einer Gangwechselempfehlung ist in der deutschen Offenlegungsschrift DE 10 2011 013 722 A1 offenbart. In der deutschen Druckschrift ist beschrieben, dass die Gangwechselempfehlung in Abhängigkeit von einer Größe eines Unterschieds zwischen einer erwarteten Beschleunigung und einer tatsächlichen Beschleunigung erfolgt.

In der deutschen Offenlegungsschrift DE 10 2011 113 491 A1 wird ein Verfahren beschrieben, bei dem eine Schaltzeitpunktempfehlung anhand von zumindest einem Fahrzeugparameter spontan angepasst wird.

Die EP 1 790 946 A2 beschreibt ein Verfahren zum Darstellen und Berechnen einer Gangwahlempfehlung in einem Fahrzeug mit einem manuell zu betätigenden Getriebe, bei dem anhand eines durch ein Steuergerät zu ermittelnden aktuellen Verzögerungssollwerts ein geeigneter Gang berechnet wird, und wobei der berechnete Gang als Gangwahlempfehlung auf einer von dem Fahrzeug umfassten Anzeigeeinheit dargestellt wird.

Vor diesem Hintergrund wird ein Verfahren zum Darstellen und Berechnen einer Gangwahlempfehlung in einem Fahrzeug mit einem manuell zu betätigenden Getriebe bereitgestellt, bei dem anhand eines durch ein Steuergerät zu ermittelnden aktuellen Verzögerungssollwerts ein zum Erzeugen einer dem aktuellen Verzögerungssollwert entsprechenden Motorbremskraft geeigneter Gang und eine Dauer, für die mit dem berechneten Gang gefahren werden muss, um eine dem Verzögerungssollwert entsprechende Energie abzubauen, berechnet werden, und wobei der berechnete Gang als Gangwahlempfehlung auf einer von dem Fahrzeug umfassten Anzeigeeinheit dargestellt wird.

Ausführungsformen ergeben sich aus der Beschreibung sowie den abhängigen Ansprüchen.

Das erfindungsgemäße Verfahren dient insbesondere dazu, einem Fahrer eines Fahrzeugs eine Gangwahlempfehlung auf einer Anzeigeeinheit darzustellen, so dass der Fahrer den entsprechenden Gang auswählen und das Fahrzeug entsprechend optimiert bewegen kann.

Unter einem Verzögerungssollwert ist im Kontext der vorgestellten Erfindung ein Wert zu verstehen, der eine Kraft beziffert, die für eine gewünschte bzw. benötigte Verzögerung eines jeweiligen Fahrzeugs benötigt wird. Mittels des Verzögerungssollwerts kann ein Verzögerungswert, d. h. eine Bremskraft, die von einer Reibbremse und/oder einer Motorbremse für ein bestimmtes Fahrmanöver aufgebracht werden muss, angegeben werden.

Um einen für einen aktuellen Verzögerungssollwert geeigneten Gang zu berechnen, sind zahlreiche Parameter zu berücksichtigen. Unter anderem muss der aktuelle Verzögerungssollwert ermittelt werden. Dazu kann bspw. ein Steuergerät des jeweiligen Fahrzeugs den aktuellen Verzögerungssollwert ermitteln bzw. bestimmen, indem das Steuergerät bspw. eine zu befahrene Strecke anhand von Navigationsdaten ermittelt und potentielle verzögerungsrelevante Punkte identifiziert, diese mit einer aktuellen Geschwindigkeit des Fahrzeugs abgleicht und eine für eine benötigte bzw. vorgeschriebene Geschwindigkeit an einem nächsten verzögerungsrelevanten Punkt benötigte Verzögerungsenergie berechnet, anhand derer sich der Verzögerungssollwert bestimmen lässt.

Um das jeweilige Fahrzeug ausgehend von einer aktuellen Geschwindigkeit auf eine bestimmte Geschwindigkeit zu verzögern, berechnet das Steuergerät des Fahrzeugs anhand vorgegebener Parameter, wie bspw. einem Motorreibungskoeffizienten und/oder einem temperaturabhängigen Motorreibungskennfeld, wie viel Energie durch den Motor bei einer bestimmten Drehzahl aufgenommen bzw. abgebaut werden kann. Anhand eines Wissens darüber, wie viel Energie der Motor aktuell aufnehmen bzw. abbauen kann, ist es dem Steuergerät möglich, eine zu einem jeweiligen Verzögerungssollwert passende Drehzahl sowie einen entsprechenden Gang für eine bekannte Strecke bei bspw. einem bekannten Gefälle zu ermitteln. Dazu wird eine Dauer berechnet, für die mit einem niedrigen Gang gefahren werden muss, um eine bestimmte Energie abzubauen. Sobald das Steuergerät einen jeweiligen optimalen bzw. geeigneten Gang berechnet hat, kann dem Fahrer eine Gangwahlempfehlung auf einer Anzeigeeinheit, wie bspw. einem TFT-, LCD-, LED-Display oder jeder weiteren technisch geeigneten Vorrichtung zum Darstellen von Informationen bereitgestellt werden. Insbesondere ist denkbar, dass dem Fahrer ein Signalton oder ein sogenannter "Schaltblitz" zum Hoch- bzw. Runterschalten dargeboten wird.

Durch eine einer jeweiligen Gangwahlempfehlung entsprechende Auswahl eines Gangs durch einen Fahrer kann das jeweilige Fahrzeug verbrauchsoptimiert und/oder verschleißoptimiert bewegt werden, da unnötiges Beschleunigen und/oder Verzögern mit einer Reibbremse, wie bspw. einer Scheibenbremse, vermieden werden kann.

Insbesondere bei Lastkraftwagen, die eine Vielzahl von Gängen bzw. Übersetzungen bereitstellen, bietet sich eine Unterstützung des Fahrers bei der Wahl des richtigen Gangs an. Dazu kann der Fahrer zur Berechnung des geeigneten Gangs ggf. weitere Informationen, wie bspw. gewünschte Ankunftszeit, gewünschter Verbrauchsmodus oder Materialschonungsverhalten bereitstellen bzw. aus einem von dem Steuergerät dargestellten Auswahlmenü auswählen.

Neben einer optimierten Verzögerungsleistung ist auch ein optimierter Kraftstoffverbrauch durch eine optimierte Gangauswahl bzw. eine optimierte Gangauswahlempfehlung denkbar. Durch eine Auswahl bspw. eines Leergangs, d. h. eines Leerlaufs oder eines hohen Gangs, d. h. einem Gang mit einem hohen Übersetzungsverhältnis, kann ein jeweiliges Fahrzeug eine bereits aufgebaute Bewegungsenergie besonders effizient aufrechterhalten. Dies bedeutet, dass durch ein Wissen über bspw. einen zukünftigen Streckenverlauf und/oder eine zukünftige Fahrzeugsituation, d. h. bspw. über Straßen- und/oder Verkehrsverhältnisse, frühzeitig auf das Fahrzeug eingewirkt werden kann, so dass das Fahrzeug verbrauchs- und/oder verschleißoptimiert verzögert wird bzw. verbrauchs- und/oder verschleißoptimiert zu einem bestimmten Streckenabschnitt bewegt wird.

In einer möglichen Ausgestaltung des erfindungsgemäßen Verfahrens ist vorgesehen, dass jeweilige aktuelle Streckendaten von einem Navigationsgerät bereitgestellt werden.

Um einen geeigneten Gang für eine Fahrt auf einer jeweiligen Route bzw. Strecke zu berechnen, sind Informationen über die zu befahrende Strecke nötig, da sich der Verzögerungssollwert nach jeweiligen Verkehrs- und/oder Umgebungsbedingungen richtet, d. h. in Abhängigkeit einer aktuellen Umgebung, wie bspw. Höhenunterschieden und/oder einer Verkehrslage der zu befahrenden Strecke ermittelt wird. Dies bedeutet, dass bspw. bei einem zu erwartenden starken Gefälle, ein hoher Verzögerungssollwert ermittelt wird, so dass ein niedriger Gang zu empfehlen wäre und bei einer bspw. zu erwartenden ebenen Strecke, eine Phase im Leerlauf ermittelt wird.

Navigationsgeräte bieten detaillierte Informationen über eine jeweilige zu befahrende Strecke an, so dass eine Informationsversorgung von bspw. einer digitalen Straßenkarte bzw. eine Informationsermittlung durch bspw. ein Steuergerät mittels einer digitalen Straßenkarte zum Ermitteln des jeweiligen Verzögerungssollwerts geeignet ist. Es ist daher vorgesehen, dass Strecken- bzw. Umgebungsinformationen aus einer digitalen Karte in einem definierten Bereich, der bspw. durch den Fahrer bestimmt werden kann, ermittelt werden.

Anhand von Streckeninformationen können unter anderem Informationen zu einer potentiellen Bewegungsenergie, die auf das jeweilige Fahrzeug übertragen wird, berechnet werden, wenn das Fahrzeug auf einer jeweiligen Strecke fährt. Um einen jeweiligen aktuellen Verzögerungssollwert zu ermitteln, können die Streckeninformationen dem Steuergerät des jeweiligen Fahrzeugs zur Verfügung gestellt oder von dem Steuergerät durch Zugriff auf eine jeweilige digitale Straßenkarte ermittelt werden. In Abhängigkeit der potentiell auf das Fahrzeug übertragenen Bewegungsenergie kann ein Verzögerungssollwert ermittelt werden, der den bspw. durch den Fahrer bestimmten Bereich von bspw. 500m, 1000m oder jeder geeigneten Distanz zur Berechnung von potentiell auf das Fahrzeug einwirkender Energie berücksichtigt.

Es ist weiterhin möglich, dass der Bereich an Streckeninformationen auf der digitalen Straßenkarte in Abhängigkeit einer aktuellen Geschwindigkeit dynamisch angepasst wird, so dass bei einer hohen Geschwindigkeit automatisch ein größerer Bereich gewählt wird und bei einer niedrigen Geschwindigkeit ein entsprechend kleiner Bereich.

In einer weiteren möglichen Ausgestaltung des erfindungsgemäßen Verfahrens ist vorgesehen, dass der Verzögerungssollwert in Abhängigkeit einer aktuellen Situation des Fahrzeugs ermittelt wird.

Unter einer aktuellen Situation eines Fahrzeug ist im Kontext der vorgestellten Erfindung ein Zustand des Fahrzeugs, wie bspw. ein Verschleißzustand und/oder eine Interaktion mit einer Umgebung durch bspw. Umwelt- oder Verkehrseinflüsse zu verstehen.

Da die aktuelle Situation eines jeweiligen Fahrzeugs, unabhängig von einer jeweiligen zu befahrenden Strecke, Auswirkung auf den aktuellen Verzögerungssollwert haben kann, ist vorgesehen, dass die aktuelle Situation des Fahrzeugs durch das Zentralsteuergerät bestimmt und ggf. bei der Berechnung des geeigneten Gangs verwendet wird.

In einer weiteren möglichen Ausgestaltung des erfindungsgemäßen Verfahrens ist vorgesehen, dass der geeignete Gang in Abhängigkeit von mindestens einem Fahrzeugparameter der folgenden Liste an Fahrzeugparametern ermittelt wird: aktuelle Fahrzeuggeschwindigkeit, aktuelle Parameter einer Reibung in einem Motor des Fahrzeugs und aktueller Verzögerungswert einer Reibbremse des Fahrzeugs.

Um bspw. einen Bremsvorgang mittels einer Reibbremse zu unterstützen, ist es möglich, dass ein durch die Reibbremse erzeugter Verzögerungswert bzw. eine durch die Reibbremse erzeugte Verzögerungsenergie bei der Berechnung des geeigneten Gangs verwendet wird. Da sich die Geschwindigkeit eines jeweiligen Fahrzeugs bei Verwendung einer Reibbremse stark ändert, ist die Verzögerungsenergie bei der Berechnung des geeigneten Gangs wesentlich, um eine falsche Gangwahlempfehlung zu vermeiden. Ferner ist denkbar, dass, um eine falsche Gangwahlempfehlung aufgrund eines variablen Verzögerungswerts einer Reibbremse zu vermeiden, dem Fahrer eine Warnung ausgegeben wird, dass eine Verwendung der Reibbremse zusätzlich zu einer geeigneten Gangwahl zu einer ungenauen Verzögerung und somit zu einer reduzierten Verbrauchs- und/oder Verschleißoptimierung führen kann.

In einer weiteren möglichen Ausgestaltung des erfindungsgemäßen Verfahrens ist vorgesehen, dass in Abhängigkeit eines durch das Steuergerät aktuell zu ermittelnden Geschwindigkeitssollwerts eine für einen optimierten Kraftstoffverbrauch geeignete Dauer für eine Fahrt in einem Leergang berechnet und auf der Anzeigeeinheit dargestellt wird.

Um Streckeninformationen bzw. deren Entsprechungen in einer aktuellen Umgebung eines jeweiligen Fahrzeugs als potentielle Energiequelle zum Bewegen des Fahrzeugs zu nutzen, ist in Ausgestaltung vorgesehen, dass anhand jeweiliger Streckeninformationen, insbesondere anhand von Informationen zu Steigungen bzw. Gefällen, eine möglichst lang dauernde Fahrt in einem Leergang, d. h. in einem Leerlauf, berechnet wird, ohne dass ein vorgegebenes Zeit- und/oder Geschwindigkeitslimit, vorgegeben durch bspw. einen Geschwindigkeitssollwert, unterschritten wird bzw. ohne, dass das Fahrzeug langsamer als durch den Geschwindigkeitssollwert vorgegeben fährt. Dies bedeutet, dass bspw. bei einem längeren leichten Gefälle dem Fahrer eine Gangwahlempfehlung zum Schalten in den Leerlauf gegeben wird, so dass das Fahrzeug sich nicht selbst antreiben muss, sondern von einer an dem Gefälle anliegenden Hangabtriebskraft beschleunigt wird. Um nach einer Fahrt im Leerlauf bspw. an einem Stoppschild wieder möglichst verschleißarm zum Stehen zu kommen, kann an einem bestimmten Punkt auf der Fahrt entlang des Gefälles eine Gangwahlempfehlung zum Schalten in einen niedrigen Gang erfolgen, um entsprechende Reibungskräfte in dem Motor des Fahrzeugs zum Abbau bzw. zur Aufnahme der durch die Hangabtriebskraft vermittelten Bewegungsenergie des Fahrzeugs zu nutzen und das Fahrzeug dadurch zu verzögern.

Unter einem Geschwindigkeitssollwert ist im Kontext der vorgestellten Erfindung ein Wert einer Geschwindigkeit zu verstehen, der bei einer vorgegebenen Reisedauer bzw. Ankunftszeit oder einem auszuwählenden Betriebsmodus eines jeweiligen Fahrzeugs nicht unterschritten werden soll. Der Geschwindigkeitssollwert kann von dem Fahrer des jeweiligen Fahrzeugs vorgegeben oder durch bspw. ein Steuergerät ermittelt werden. Selbstverständlich kann ein jeweiliges Fahrzeug, unabhängig von einer aktuellen Gangwahlempfehlung jederzeit, bspw. in einer Gefahrensituation mit bspw. einer Reibbremse zum Stillstand gebracht werden.

In einer weiteren möglichen Ausgestaltung des erfindungsgemäßen Verfahrens ist vorgesehen, dass durch das Zentralsteuergerät eine bei einer Verwendung eines jeweiligen geeigneten Gangs zu erwartende Motordrehzahl ermittelt wird und bei dem für den Fall, dass die zu erwartende Motordrehzahl über einem vorzugebenden Grenzwert liegt, vor einem Einkupplungsvorgang bei einer entsprechenden Gangwahl eine aktuelle Motordrehzahl an die zu erwartende Motordrehzahl angepasst wird.

Da es bei einem Schaltvorgang in einen gegenüber einem aktuellen Gang niedrigeren Gang zu einer Drehzahlerhöhung des Motors des jeweiligen Fahrzeugs kommt, entstehen gegenüber einem aktuellen Betrieb erhöhte Reibungskräfte, die das Fahrzeug verzögern und zu einem für jeweilige Insassen des Fahrzeugs spürbaren Ruck bzw. zu spürbaren Kräften im Innenraum des Fahrzeugs führen. Um ein plötzliches Einwirken der Kräfte auf den Innenraum bzw. die Insassen des Fahrzeugs zu verhindern und ein sanftes Verzögern des Fahrzeugs zu ermöglichen, ist in Ausgestaltung des erfindungsgemäßen Verfahrens vorgesehen, dass vor einem Einkuppeln bei einer manuellen Gangwahl in einen niedrigeren Gang, die Drehzahl des Motors erhöht, d. h. an eine bei einer aktuellen Geschwindigkeit des Fahrzeugs zu erwartende Drehzahl des Motors angepasst wird, so dass die auf die Insassen einwirkenden Kräfte minimiert, bzw. auf einen größeren Zeitraum verteilt werden und kein spürbarer Ruck durch das Fahrzeug geht.

Es ist weiterhin möglich, dass die Erhöhung der Drehzahl des Motors vor einem Einkuppeln nur dann erfolgt, wenn ein Unterschied zwischen aktueller Drehzahl und zu erwartender Drehzahl bei Betrieb in dem jeweiligen niedrigeren Gang einen vorgegebenen Grenzwert übersteigt.

Ferner umfasst die vorliegende Erfindung ein Fahrzeug mit mindestens einem Steuergerät und mindestens einer Anzeigeeinheit, wobei das Steuergerät dazu konfiguriert ist, einen aktuellen Verzögerungssollwert zu ermitteln und einen für den aktuellen Verzögerungssollwert geeigneten Gang zu berechnen sowie den berechneten geeigneten Gang als Gangwahlempfehlung auf der mindestens einen Anzeigeeinheit darzustellen.

Das erfindungsgemäße Verfahren dient insbesondere zum Betrieb des erfindungsgemäßen Fahrzeugs.

Das erfindungsgemäße Fahrzeug kann als Personenkraftwagen, Lastkraftwagen, Kraftrad oder jedes weitere Fahrzeug ausgestaltet sein. Insbesondere bei Lastkraftwagen, die aufgrund eines hohen Gesamtgewichts hohe Verzögerungswerte bedingen, werden Bremsen eines jeweiligen Lastkraftwagens stark belastet, so dass das erfindungsgemäße Verfahren zur Entlastung der Bremsen beitragen kann.

Das erfindungsgemäße Fahrzeug entlastet seinen Fahrer durch eine Unterstützung bei der Gangwahl und kann den Fahrer dadurch auf ggf. vorhandene Gefahrensituationen, wie bspw. hinter einer Kuppe oder einer Kurve verborgene Stoppstellen vorbereiten, so dass ein starkes und materialbeanspruchendes Bremsen vermieden werden kann.
Durch eine Schnittstelle, wie bspw. eine Car-to-X Schnittstelle, kann das Fahrzeug bspw. mit einem Server oder weiteren Fahrzeugen in Verbindung treten, um ggf. aktuell auf einer Strecke vorhandene Verkehrsbedingungen zu ermitteln und die Gangwahlempfehlung entsprechend anzupassen.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand einer Ausführungsform in den Zeichnungen schematisch dargestellt und wird unter Bezugnahme auf die Zeichnungen schematisch und ausführlich beschrieben.

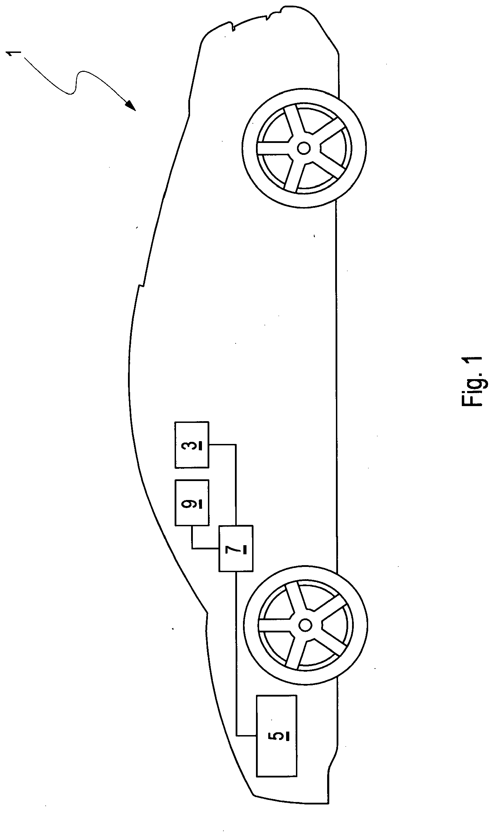

Figur 1 zeigt eine schematische Übersicht einer möglichen Ausgestaltung des erfindungsgemäßen Verfahrens.
Figur 2 zeigt eine schematische Übersicht über einen Geschwindigkeitsverlauf eines Fahrzeugs bei einer möglichen Ausgestaltung des erfindungsgemäßen Verfahrens mit einem Segelbetrieb.

Ein Fahrzeug 1, das von einem Fahrer auf einer durch ein Navigationssystem 3 bereitgestellten Route gesteuert wird, umfasst einen Motor 5, ein Zentralsteuergerät 7 und eine Anzeigeeinheit 9.

Um dem Fahrer eine zu einer aktuellen Situation des Fahrzeugs 1 auf der Route passende Gangwahlempfehlung auf der Anzeigeeinheit 9 darzustellen, ist vorgesehen, dass das Zentralsteuergerät 7 von dem Navigationssystem 3 Informationen über die Route abfrägt, d. h. bspw. herunterlädt, und anhand der abgefragten Informationen einen Verzögerungssollwert berechnet, der zur Berechnung eines für die aktuelle Situation des Fahrzeugs 1 auf der Route optimalen Gangs verwendet wird. Anhand der von dem Navigationssystem 3 abgefragten Informationen berechnet das Zentralsteuergerät 7 eine durch eine Umgebung auf der Route potentiell auf das Fahrzeug 1 einwirkende Beschleunigungskraft und eine zur Kompensation der Beschleunigungskraft notwendige Brems- bzw. Verzögerungskraft. Anhand eines in dem Zentralsteuergerät 7 hinterlegten Reibwertkoeffizienten, der sich bspw. anhand eines temperaturabhängigen Kennfelds des Motors 5 ändern kann, berechnet das Zentralsteuergerät 7 eine zum Erzeugen der Bremskraft notwendige Drehzahl des Motors 5 sowie einen entsprechenden Gang.

Da die notwendige Bremskraft ggf. über eine bestimmte Strecke hinweg präventiv aufgebaut werden kann, berechnet das Zentralsteuergerät 7 ferner einen idealen Zeitpunkt zum Einlegen des entsprechenden Gangs bzw. zum Aufbringen der durch den Gang bedingten Bremskraft. Dazu ermittelt das Zentralsteuergerät 7 anhand der von dem Navigationssystem 3 abgefragten Informationen jeweilige verzögerungsrelevante Punkte auf der Route, wie bspw. Stoppstellen, und gibt eine entsprechende Gangwahlempfehlung auf der Anzeigeeinheit 9 aus, so dass das Fahrzeug 1 unter Verwendung einer Motorbremse mit einer entsprechenden Geschwindigkeit bzw. gebremst an einem jeweiligen verzögerungsrelevanten Punkt ankommt.

Um eine Kraftstoffeffizienz des Fahrzeugs 1 zu erhöhen, ist weiterhin vorgesehen, dass das Fahrzeug 1, wenn ein aktueller Verzögerungssollwert gleich Null ist, ermittelt, ob das Fahrzeug 1 bei Betrieb in einem Leerlauf, d. h. ohne aktiven Vortrieb durch eine von dem Motor 5 erzeugte Antriebskraft, eine aktuelle Geschwindigkeit und/oder eine aktuelle Reisezeit beibehalten kann.

Falls das Fahrzeug 1, bspw. bedingt durch ein Gefälle auf einem aktuellen befahrenen Teil der Route, seine aktuelle Geschwindigkeit auch ohne eine durch den Motor 5 erzeugte Antriebskraft aufrecht erhalten kann, ist vorgesehen, dass das Zentralsteuergerät 7 eine Gangwahlempfehlung zum Schalten in den Leerlauf ausgibt, so dass der Motor 5 nicht unnötig betrieben wird und entsprechend weniger Kraftstoff verbraucht.

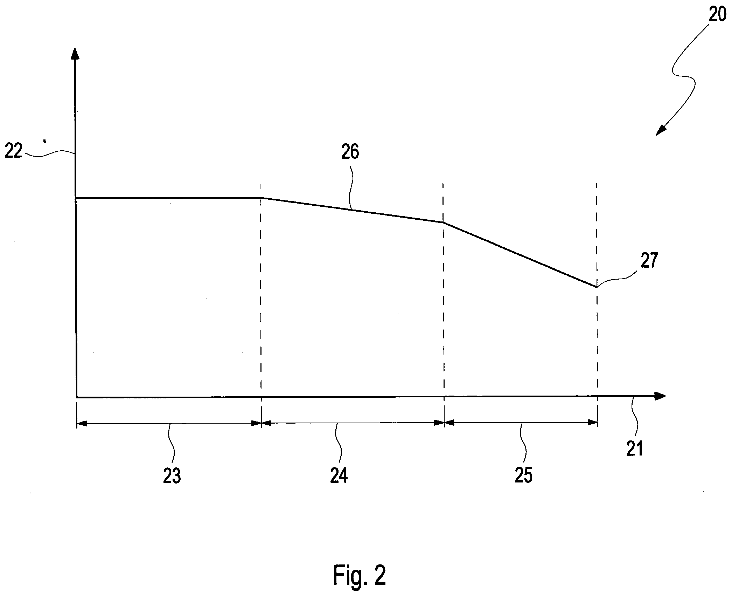

In Figur 2 ist ein Diagramm 20 dargestellt, das auf einer Abszisse 21 eine vergangene Zeit und auf einer Ordinate 22 eine entsprechende Geschwindigkeit eines jeweiligen Fahrzeugs abbildet.

Ein Geschwindigkeitsverlauf 26 des Fahrzeugs wird hier in drei Phasen untergliedert, nämlich eine Antriebsphase, wie sie durch Pfeil 23 angedeutet ist, eine Segelphase, wie sie durch Pfeil 24 angedeutet ist und eine Verzögerungsphase, wie sie durch Pfeil 25 angedeutet ist.

Der Geschwindigkeitsverlauf 26 verdeutlicht, wie ein Fahrzeug effizient unter Verwendung eines Segelbetriebs, d. h. einer Phase ohne Antrieb und in einem Leerlauf bzw. Freigang, bewegt werden kann. Bei dem in Diagramm 20 dargestellten Geschwindigkeitsverlauf 26 wird das Fahrzeug lediglich in der Antriebsphase, die durch den Pfeil 23 dargestellt ist, aktiv, d. h. unter Verwendung von Motorkraft angetrieben und verbraucht entsprechend nur in dieser Phase Kraftstoff zur Fortbewegung.

Um das Fahrzeug effizient zu betreiben, ist vorgesehen, dass für den Fall, dass auf einer zu befahrenden Strecke, bspw. gemäß einer Information aus einem Navigationsgerät, ein verzögerungsrelevanter Punkt 27 zu erwarten ist, eine Gangwahlempfehlung für einen Leerlauf ausgegeben wird, so dass das Fahrzeug effizient, ohne Antriebsenergie aufzuwenden und ohne durch Reibung eines Motors des Fahrzeugs verzögert zu werden, während der durch den Pfeil 24 dargestellten Segelphase quasi "segelt".

Um das Fahrzeug letztlich auf den verzögerungsrelevanten Punkt 27 vorzubereiten, ist vorgesehen, dass eine entsprechende Gangwahlempfehlung ausgegeben wird, die eine jeweils benötigte Reibungsenergie durch den Motor und/oder Antriebskomponenten des Fahrzeugs bedingt, so dass das Fahrzeug verzögert und mit einer definierten Geschwindigkeit an dem verzögerungsrelevanten Punkt 27 ankommt, wie es durch ein Abfallen des Geschwindigkeitsverlaufs 26 in der Verzögerungsphase, die durch den Pfeil 25 dargestellt ist, in dem Diagramm 20 ersichtlich ist.

Weiterhin ist denkbar, dass das Fahrzeug periodisch abwechselnd im Leerlauf und unter Verwendung von Motorkraft, d. h. in Segelphasen und Antriebsphasen, bewegt wird. Dazu ist vorgesehen, dass ein Zentralsteuergerät des Fahrzeugs ein für ein vorgegebenes Durchschnittstempo, das bspw. durch eine Reisezeit oder jeweilige Streckenbedingungen vorgegeben sein kann, optimales Verhältnis von Leerlaufphasen und Antriebsphasen berechnet und entsprechende Gangwahlempfehlungen auf einer von dem Fahrzeug umfassten Anzeigeeinheit ausgibt.

## Patentansprüche

1. Verfahren zum Darstellen und Berechnen einer Gangwahlempfehlung in einem Fahrzeug mit einem manuell zu betätigenden Getriebe, bei dem anhand eines durch ein Steuergerät zu ermittelnden aktuellen Verzögerungssollwerts ein zum Erzeugen einer dem aktuellen Verzögerungssollwert entsprechenden Motorbremskraft geeigneter Gang und eine Dauer, für die mit dem berechneten Gang gefahren werden muss, um eine dem Verzögerungssollwert entsprechende Energie abzubauen, berechnet werden, und wobei der berechnete Gang als Gangwahlempfehlung auf einer von dem Fahrzeug umfassten Anzeigeeinheit dargestellt wird.

2. Verfahren nach Anspruch 1, bei dem der Verzögerungssollwert in Abhängigkeit von Streckendaten einer zu befahrenden Strecke ermittelt wird.

3. Verfahren nach Anspruch 2, bei dem die Streckendaten von einem Navigationsgerät bereitgestellt werden.

4. Verfahren nach einem der voranstehenden Ansprüche, bei dem der Verzögerungssollwert in Abhängigkeit einer aktuellen Situation des Fahrzeugs ermittelt wird.

5. Verfahren nach einem der voranstehenden Ansprüche, bei dem der geeignete Gang in Abhängigkeit von mindestens einem Fahrzeugparameter der folgenden Liste an Fahrzeugparametern ermittelt wird: aktuelle Fahrzeuggeschwindigkeit, aktuelle Parameter einer Reibung in einem Motor des Fahrzeugs und aktueller Verzögerungswert einer Reibbremse des Fahrzeugs.

6. Verfahren nach einem der voranstehenden Ansprüche, bei dem der geeignete Gang derart berechnet wird, dass das Fahrzeug verbrauchsoptimiert bewegt wird.

7. Verfahren nach Anspruch 6, bei dem in Abhängigkeit eines durch das Steuergerät aktuell zu ermittelnden Geschwindigkeitssollwerts eine für einen optimierten Kraftstoffverbrauch geeignete Dauer für eine Fahrt in einem Leergang berechnet und auf der Anzeigeeinheit dargestellt wird.

8. Verfahren nach Anspruch 7, bei dem der Geschwindigkeitssollwert in Abhängigkeit einer von einem Fahrer vorzugebenden Ankunftszeit berechnet wird.

9. Verfahren nach einem der voranstehenden Ansprüche, bei dem durch das Zentralsteuergerät eine bei einer Verwendung eines jeweiligen geeigneten Gangs zu erwartende Motordrehzahl ermittelt wird und bei dem für den Fall, dass die zu erwartende Motordrehzahl über einem vorzugebenden Grenzwert liegt, vor einem Einkupplungsvorgang bei einer entsprechenden Gangwahl eine aktuelle Motordrehzahl an die zu erwartende Motordrehzahl angepasst wird.

10. Fahrzeug (1) mit mindestens einem Steuergerät (7) und mindestens einer Anzeigeeinheit (9), wobei das Steuergerät (7) dazu konfiguriert ist, einen aktuellen Verzögerungssollwert zu ermitteln und einen zum Erzeugen einer dem aktuellen Verzögerungssollwert entsprechenden Motorbremskraft geeigneten Gang und eine Dauer, für die mit dem berechneten Gang gefahren werden muss, um eine dem Verzögerungssollwert entsprechende Energie abzubauen, zu berechnen, und wobei das Steuergerät weiterhin dazu konfiguriert ist, den berechneten Gang als Gangwahlempfehlung auf der mindestens einen Anzeigeeinheit (9) darzustellen.

11. Steuergerät (9) in einem Fahrzeug (1), das dazu konfiguriert ist, ein Verfahren nach einem der Ansprüche 1 bis 9 auszuführen.

## Claims

1. Method for displaying and calculating a gear selection recommendation in a vehicle that has a manually operated gearbox, in which, on the basis of a current deceleration target value to be determined by a control device, a gear suitable for generating an engine braking force corresponding to the current deceleration target value and a duration for which the calculated gear must be used, is calculated in order to reduce an energy corresponding to the deceleration target value, and wherein the calculated gear is displayed as a gear selection recommendation on a display unit comprised by the vehicle.

2. Method according to claim 1, in which the deceleration target value is determined depending on route data of a route to be travelled.

3. Method according to claim 2, in which the route data is provided by a navigation device.

4. Method according to one of the preceding claims, in which the deceleration target value is determined depending on a current situation of the vehicle.

5. Method according to one of the preceding claims, in which the suitable gear is determined depending on at least one vehicle parameter from the following list of vehicle parameters: current vehicle speed, current parameters of a friction in an engine of the vehicle and current deceleration value of a frictional brake of the vehicle.

6. Method according to one of the preceding claims, in which the suitable gear is calculated such that the vehicle moves in a consumption-optimised manner.

7. Method according to claim 6, in which a duration suitable for optimised fuel consumption for a travel in an idle gear is calculated, depending on a current speed target value to be determined by the control device, and is displayed on the display unit.

8. Method according to claim 7, in which the speed target value is calculated depending on an arrival time to be specified by the driver.

9. Method according to one of the preceding claims, in which an engine speed to be expected when using a respective suitable gear is determined by the central control device and, in the case where the expected engine speed is greater than a predetermined threshold, a current motor speed is adjusted to the expected motor speed before a coupling procedure during a corresponding gear selection.

10. Vehicle (1) comprising at least one control device (7) and at least one display unit (9), wherein the control device (7) is configured so that a current deceleration target value to be determined and a gear suitable for generating an engine braking force corresponding to the current deceleration target value and a duration, for which the calculated gear must be used, are calculated in order to reduce an energy corresponding to the deceleration target value, and wherein the control device is further configured to display the calculated gear as a gear selection recommendation on the at least one display unit (9).

11. Control device (9) in a vehicle (1), which is configured to carry out a method according to one of claims 1 to 9.

## Revendications

1. Procédé pour représenter et calculer une recommandation de sélection de vitesse dans un véhicule doté d'une boîte de vitesse à actionnement manuel, dans lequel sur la base d'une valeur théorique de décélération actuelle à déterminer par un dispositif de commande, une vitesse appropriée pour générer une force de frein moteur correspondant à la valeur théorique de décélération actuelle et une durée pendant laquelle la conduite doit s'effectuer à la vitesse calculée pour diminuer une énergie correspondant à la valeur théorique de décélération sont calculées, et dans lequel la vitesse calculée en tant que recommandation de sélection de vitesse est représentée sur une unité d'affichage que propose le véhicule.

2. Procédé selon la revendication 1, dans lequel la valeur théorique de décélération est déterminée en fonction des données de trajet d'un trajet à parcourir.

3. Procédé selon la revendication 2, dans lequel les données de trajet sont mises à disposition par un dispositif de navigation.

4. Procédé selon l'une quelconque des revendications précédentes, dans lequel la valeur théorique de décélération est déterminée en fonction d'une situation actuelle du véhicule.

5. Procédé selon l'une quelconque des revendications précédentes, dans lequel la vitesse appropriée est déterminée en fonction d'au moins un paramètre de véhicule de la liste suivante de paramètres de véhicule : vitesse actuelle du véhicule, paramètres actuels d'une friction dans un moteur du véhicule et valeur de décélération actuelle d'un frein à friction du véhicule.

6. Procédé selon l'une quelconque des revendications précédentes, dans lequel la vitesse appropriée est calculée de telle sorte que le véhicule est mû de façon à optimiser sa consommation.

7. Procédé selon la revendication 6, dans lequel une durée d'un trajet appropriée pour une consommation optimisée de carburant à un point mort est calculée en fonction d'une valeur théorique de vitesse à calculer actuellement par le dispositif de commande et est représentée sur l'unité d'affichage.

8. Procédé selon la revendication 7, dans lequel la valeur théorique de vitesse est calculée en fonction d'un temps d'arrivée à indiquer par un conducteur.

9. Procédé selon l'une quelconque des revendications précédentes, dans lequel un régime de moteur attendu lors d'une utilisation d'une vitesse appropriée respective est déterminé par le dispositif de commande central, et dans lequel dans le cas où le régime de moteur attendu se situe au-dessus d'une valeur limite à indiquer, avant un processus d'embrayage lors d'une sélection de vitesse correspondante, un régime de moteur actuel est ajusté au régime de moteur attendu.

10. Véhicule (1) comportant au moins un dispositif de commande (7) et au moins une unité d'affichage (9), dans lequel le dispositif de commande (7) est configuré pour déterminer une valeur théorique de décélération actuelle et pour calculer une vitesse appropriée pour générer une force de frein moteur correspondant à la valeur théorique de décélération actuelle et une durée pendant laquelle la conduite doit s'effectuer à la vitesse calculée pour diminuer une énergie correspondant à la valeur théorique de décélération, et dans lequel le dispositif de commande est en outre configuré pour représenter la vitesse calculée en tant que recommandation de sélection de vitesse sur l'au moins une unité d'affichage (9).

11. Dispositif de commande (9) dans un véhicule (1) qui est configuré pour exécuter un procédé selon l'une quelconque des revendications 1 à 9.
